# EUROPÄISCHE PATENTSCHRIFT

(11) **EP 2 987 546 B1**
(45) Veröffentlichungstag und Bekanntmachung des Hinweises auf die Patenterteilung: **11.12.2019**
(21) Anmeldenummer: 15178764.5
(22) Anmeldetag: 29.07.2015
(51) Int. Cl.: B01D 45/06, B01D 45/08

(54) **FILTERELEMENT ZUR ABTRENNUNG VON PARTIKELN AUS EINEM PARTIKELBELASTETEN ROHGASSTROM**
FILTER ELEMENT FOR SEPARATION OF PARTICLES FROM A PARTICLE LOADED RAW FLOW OF GAS
ÉLEMENT DE FILTRE DESTINE A LA SEPARATION DE PARTICULES DANS UN FLUX DE GAZ BRUT CHARGE EN PARTICULES

(30) Priorität: 18.08.2014 DE 202014006595 U
(43) Veröffentlichungstag der Anmeldung: 24.02.2016
(73) Patentinhaber: Big Dutchman International GmbH, 49377 Vechta (DE)
(72) Erfinder: KUENNEN, Sven, 49685 Höltinghausen (DE)
(74) Vertreter: Eisenführ Speiser

(56) Entgegenhaltungen:
- EP-B1- 1 655 064
- DE-A1- 2 501 163
- DE-B- 1 293 004
- US-B1- 6 328 778

## Beschreibung

Die Erfindung betrifft ein Filterelement zur Abtrennung von Partikeln aus einem partikelbelasteten Rohgasstrom. Die Erfindung betrifft ferner einen Grundträger sowie einen Aufsatz für ein solches Filterelement. Die Erfindung betrifft ferner ein Verfahren zur Montage eines solchen Filterelements sowie ein Verfahren zur Herstellung eines Grundträgers und/oder einen Aufsatzes für ein solches Filterelement.

Filterelemente der Eingangs genannten Art werden auch als Faltfilter oder regenerierbare Filter bezeichnet und sind beispielsweise aus der EP 1 655 064 B1 oder der EP 2 384 804 B1 bekannt. Insbesondere im Einsatzbereich landwirtschaftlicher Betriebe, gerade in der Nutztierhaltung, werden solche Filterelemente zur Reinigung der Abluft aus Betriebsräumen, wie beispielsweise Ställen, eingesetzt. Die Abluft aus Betriebsräumen landwirtschaftlicher Betriebe ist regelmäßig erheblich staubbelastet und führt zudem oftmals Tierausscheidungen mit sich. Daher sind insbesondere auswaschbare Filterelemente bevorzugt, die gereinigt werden können. Es besteht jedoch Bedarf nach weiter verbesserten Filterelementen, die insbesondere robust und zuverlässig sind, auch unter besonders beanspruchenden Betriebsbedingungen, und die ferner kostengünstig herzustellen, zu transportieren und zu montieren sowie zu reparieren sind.

Es ist daher die Aufgabe der vorliegenden Erfindung, ein Filterelement bereitzustellen, welches einen oder mehrere der genannten Bedarfe befriedigt.

Diese Aufgabe wird erfindungsgemäß gelöst durch ein Filterelement zur Abtrennung von Partikeln aus einem partikelbelasteten Rohgasstrom, umfassend: mindestens einen Grundträger, der als gefaltete Platte mit mehreren ersten Faltkanten und mehreren zweiten Faltkanten ausgebildet ist, wobei im Bereich der ersten Faltkanten mehrere erste Durchtrittsöffnungen und im Bereich der zweiten Faltkanten mehrere erste Verbindungselemente angeordnet sind, und mehrere Aufsätze, wobei jeder Aufsatz als ein in Längsrichtung entlang einer Faltlinie faltbarer Streifen mit mehreren zweiten Durchtrittsöffnungen und einer ersten und einer zweiten Längskante ausgebildet ist, und wobei jeder Aufsatz ferner im Bereich der ersten und zweiten Längskante zweite Verbindungselemente aufweist, wobei die Aufsätze jeweils entlang ihrer Faltlinie gefaltet und derart auf dem Grundträger angeordnet sind, dass die zweiten Verbindungselemente der ersten und zweiten Längskanten jedes Aufsatzes mit den ersten Verbindungselementen zweier benachbarter zweiter Faltkanten verbunden sind und die zweiten Verbindungselemente der ersten Längskante eines der Aufsätze und die zweiten Verbindungelemente der zweiten Längskante eines benachbarten Aufsatzes mit den ersten Verbindungselementen einer der zweiten Faltkanten des Grundträgers verbunden sind.

Das erfindungsgemäße Filterelement weist mindestens einen Grundträger und mehrere, mit dem Grundträger verbundene Aufsätze auf. Im Grundträger sind mehrere erste Durchtrittsöffnungen vorgesehen und in den Aufsätzen mehrere zweite Durchtrittsöffnungen. Die ersten und zweiten Durchtrittsöffnungen sind in Strömungsrichtung versetzt zueinander angeordnet, so dass die partikelbelastete Abluft, also der Rohgasstrom, aufgrund der versetzten Anordnung der ersten und zweiten Durchtrittsöffnungen in einem Zwischenströmungsraum zwischen dem Grundträger und den mehreren Aufsätzen abgelenkt wird und die Partikel im Rohgasstrom mit einer höheren Dichte diesem Ablenkungsvorgang nicht folgen können und sich daher im Zwischenströmungsraum sammeln.

Der Grundträger ist als gefaltete Platte ausgebildet mit mehreren ersten und mehreren zweiten Faltkanten, die einander abwechseln. Zwischen den Faltkanten sind Seitenwände ausgebildet, die im Querschnitt des Grundträgers eine zickzackförmige Anordnung aufweisen, wobei die mehreren ersten Faltkanten die oberen Umlenkpunkte und die mehreren zweiten Faltkanten die unteren Umlenkpunkte der Zickzackform bilden. Der Grundträger ist vorzugsweise formstabil ausgebildet, d. h. dass während der vorgesehenen Belastung des Grundträgers bei Transport, Montage, Betriebseinsatz, Reinigung, Wartung und/oder Demontage der Grundträger seine Form im Wesentlichen beibehält.

Auf dem mindestens einen Grundträger sind mehrere Aufsätze angeordnet. Die Aufsätze sind als faltbare Streifen ausgebildet, die entlang ihrer Faltlinie gefaltet auf dem Grundträger angeordnet sind. Im gefalteten Zustand haben die Aufsätze eine im Wesentlichen V-förmige Querschnittsform. Eine Faltlinie kann auch als linienförmiger Faltungsbereich bezeichnet werden.

Die gefalteten Aufsätze sind so auf dem Grundträger angeordnet, dass die ersten und zweiten Längskanten eines Aufsatzes mittels der daran angeordneten zweiten Verbindungselemente mit den ersten Verbindungselementen des Grundträgers im Bereich zweier benachbarter zweiter Faltkanten des Grundträgers verbunden sind. Die Aufsätze sind dabei vorzugsweise so angeordnet, dass jeweils die Faltlinie eines Aufsatzes gleichgerichtet, aber beabstandet zu jeweils einer ersten Faltkante des Grundträgers angeordnet ist.

Zwischen dem Grundträger und den mehreren Aufsätzen ist ein Zwischenströmungsraum ausgebildet. In der Regel bildet der Grundträger die Anströmseite des Filterelements und die mehreren Aufsätze die Abströmseite.

Die mehreren ersten Durchtrittsöffnungen sind, vorzugsweise äquidistant, voneinander beabstandet. Auch die zweiten Durchtrittsöffnungen sind, vorzugsweise äquidistant, voneinander beabstandet. Auch die ersten Verbindungselemente des Grundträgers sind, vorzugsweise äquidistant, voneinander beabstandet, ebenso wie vorzugsweise die zweiten Verbindungselemente der ersten und zweiten Längskante der Aufsätze, vorzugsweise äquidistant, voneinander beabstandet sind.

Die Anordnung der ersten Durchtrittsöffnungen im Bereich der ersten Faltkanten des Grundträgers, der ersten Verbindungselemente im Bereich der zweiten Faltkanten des Grundträgers und die Anordnung der zweiten Verbindungselemente im Bereich der ersten und zweiten Längskanten der Aufsätze bedeutet, dass die Durchtrittsöffnungen bzw. Verbindungselemente nahe der Faltkanten bzw. der Längskanten angeordnet sind.

Die ersten Durchtrittsöffnungen im Bereich der ersten Faltkanten können sich beispielsweise teilweise über die beiden an eine erste Faltkante angrenzenden Seitenwände des Grundträgers erstrecken, so dass die erste Faltkante im Bereich einer ersten Durchtrittsöffnung unterbrochen ist. Bevorzugt ist, dass die ersten Durchtrittsöffnungen rund oder oval ausgebildet sind und mittig zu jeweils einer ersten Faltkante angeordnet sind. Alternativ können die ersten Durchtrittsöffnungen auch außermittig zu jeweils einer ersten Faltkante angeordnet sein. Die ersten Durchtrittsöffnungen erstrecken sich vorzugsweise über einen Bereich von weniger als 50%, insbesondere weniger als 30%, vorzugsweise weniger als 20% der Erstreckung einer Seitenwand.

Die ersten Verbindungselemente sind vorzugsweise nahe der zweiten Faltkanten des Grundträgers angeordnet, insbesondere in den an die zweiten Faltkanten angrenzenden Hälften, insbesondere den an die zweiten Faltkanten angrenzenden Dritteln oder Vierteln der Seitenwände des Grundträgers.

Die zweiten Verbindungselemente der Aufsätze sind vorzugsweise weniger als 25% der Erstreckung des Aufsatzes quer zu den beiden Längskanten von den beiden Längskanten beabstandet angeordnet.

Die mehreren auf dem Grundträger angeordneten Aufsätze sind so positioniert, dass sich von zwei benachbarten Aufsätzen jeweils eine erste und eine zweite Längskante gemeinsam im Bereich einer einzigen bzw. gemeinsamen zweiten Faltkante des Grundträgers befinden. Zwei benachbarte Aufsätze stoßen somit mit ihrer jeweils ersten bzw. zweiten Längskante aneinander sowie an eine gemeinsame bzw. einzige zweite Faltkante des Grundträgers. Ebenso sind vorzugsweise in jeder der zweiten Faltkanten des Grundträges jeweils eine erste und eine zweite Längskante zweier benachbarter Aufsätze angeordnet. Nur in den jeweils den Grundträger bzw. das Filterelement seitlich begrenzenden zweiten Faltkanten des Grundträgers an dessen Längskanten ist vorzugsweise jeweils nur eine Längskante des seitlich jeweils letzten Aufsatzes angeordnet.

Ein Filterelement kann vorzugsweise auch mehrere Grundträger aufweisen, die von ihrer Grundfläche her vorzugsweise im Wesentlichen quadratisch oder rechteckig ausgebildet sind und mit ihren Längs- oder Querseiten aneinander angrenzend zu einem größeren Rechteck oder Quadrat angeordnet sein können. Besonders bevorzugt ist, dass die mehreren Aufsätze sich in ihrer Längsrichtung über zwei oder mehrere Grundträger erstrecken und diese somit miteinander verbinden können.

Das erfindungsgemäße Filterelement hat verschiedene Vorteile. Die Ausbildung mit mindestens einem, vorzugsweise formstabilen, Grundträger und mehreren als entlang einer Faltlinie faltbaren Streifen ausgebildeten Aufsätzen ermöglicht es beispielsweise, die Bestandteile des Filterelements platzsparend zu transportieren und das Filterelement erst am Einsatzort zusammenzusetzen. Beispielsweise können mehrere Grundträger gestapelt werden und ebenso mehrere Aufsätze, vorzugsweise in ungefaltetem Zustand, gestapelt werden. Eine Vielzahl von Grundträgern und eine Vielzahl von Aufsätzen kann somit jeweils platzsparend und damit kostengünstig transportiert werden. Ferner ermöglicht es der Aufbau des erfindungsgemäßen Filterelements, die Größe bzw. die Abmessungen des Filterelements an die Anforderungen der Einbausituation anzupassen, indem die Anzahl der verwendeten Grundträger und eine dazu passende Anzahl von Aufsätzen verwendet werden kann, um ein Filterelement zu bilden.

In einer besonders bevorzugten Fortbildungsform ist der Grundträger als Spritzgussteil ausgebildet. Die Herstellung des Grundträgers im Spritzgussverfahren hat unter anderem den Vorteil, dass so auf einfache und kostengünstige Weise ein formstabiler Grundträger hergestellt werden kann, der gleichzeitig robust und insbesondere flüssigkeits- oder wasserbeständig und damit abwaschbar ist.

Ferner ist bevorzugt, dass die Aufsätze als Extrusionsteile ausgebildet sind. Die Herstellung der Aufsätze im Extrusionsverfahren hat ebenfalls den Vorteil, dass diese kostengünstig und einfach hergestellt werden können, und die Aufsätze ebenfalls robust und flüssigkeits- oder wasserbeständig und damit abwaschbar sind.

Die Faltlinien der Aufsätze sind vorzugsweise jeweils als Filmscharnier ausgebildet. Ferner ist bevorzugt, dass sich die Faltlinie eines Aufsatzes in oder quer zur Extrusionsrichtung erstreckt. Die Faltlinie kann beispielsweise als Perforation ausgebildet sein und durch Stanzen hergestellt werden. Die Faltlinie kann auch aus einem anderen Material als der übrige Teil des Aufsatzes bestehen. Alternativ oder zusätzlich kann auch das Material im Bereich der Faltlinie dünner ausgebildet sein als im übrigen Teil des Aufsatzes.

Ferner ist insbesondere bevorzugt, dass der Grundträger und/oder die Aufsätze aus Kunststoff bestehen oder Kunststoff aufweisen. Besonders bevorzugt ist ferner, dass der Grundträger aus Polypropylen, Copolymer (PP-C) besteht oder Polypropylen, Copolymer (PP-C) aufweist und/oder die Aufsätze aus Polyvinylchlorid (PVC) bestehen oder Polyvinylchlorid (PVC) aufweisen. Diese Materialien haben sich als besonders geeignet erwiesen, den hohen Anforderungen insbesondere im Einsatzbereich in der Nutztierhaltung langfristig standzuhalten.

Eine weitere bevorzugte Ausführungsform sieht vor, dass die Längserstreckung der Aufsätze einem, vorzugsweise ganzzahligen, Vielfachen der Erstreckung des mindestens einen Grundträgers in Richtung seiner Faltkanten entspricht.

Wenn beispielsweise die Längserstreckung der Aufsätze dem Doppelten der Erstreckung eines Grundträgers in Richtung seiner Faltkanten entspricht, können zwei Grundträger, die in Richtung ihrer Faltkanten hintereinander angeordnet sind, durch Verbindung mit einem Aufsatz verbunden werden, da sich der eine Aufsatz über die beiden hintereinander angeordneten Grundträger erstreckt. Da mehrere Aufsätze auf einem Grundträger angeordnet werden, verbinden also auch diese mehreren Aufsätze dann die beiden Grundträger, sodass die beiden Grundträger über die gemeinsamen Aufsätze miteinander verbunden sind. Auf diese Weise lassen sich schnell und einfach verschiedene Größen von Filterelementen realisieren.

Besonders bevorzugt ist ferner, dass die Verbindung zwischen den ersten und zweiten Verbindungselementen als lösbare Verbindung ausgebildet ist. Beispielsweise kann die Verbindung zwischen den ersten und zweiten Verbindungselementen als Rast- oder Schnappverbindung ausgebildet sein.

Eine lösbare Verbindung zwischen den ersten und zweiten Verbindungselementen hat unter anderem den Vorteil, dass beispielsweise beschädigte Grundträger oder Aufsätze leicht und einzeln ausgetauscht werden können, ohne das gesamte Filterelement austauschen zu müssen.

In einer weiteren Ausgestaltung ist bevorzugt, dass der Grundträger zwei gegenüberliegende, sich parallel zu den Faltkanten erstreckende Längskanten aufweist, wobei beide Längskanten jeweils Abschnitte zweiter Faltkanten bilden, wobei vorzugsweise die Abschnitte der zweiten Faltkante der ersten Längskante und die Abschnitte der zweiten Faltkante der zweiten Längskante in Richtung der Faltkanten überschneidungsfrei sind. Dabei ist besonders bevorzugt, dass die Abschnitte einer Längskante eines ersten Grundträgers mit den Abschnitten der anderen Längskante eines zweiten, benachbarten Grundträgers eine gemeinsame zweite Faltkante bilden.

Eine solche Ausgestaltung hat den Vorteil, dass mehrere Grundträger in Richtung orthogonal zu ihren Faltkanten nebeneinander angeordnet werden können, ohne dass zwischen den Grundträgern eine Lücke oder ein Abstand entsteht. Ferner hat diese Ausgestaltung den Vorteil, dass bei Verbindung zweier nebeneinander angeordneter Grundträger mit den Aufsätzen über die gemeinsame zweite Faltkante auch die beiden nebeneinander angeordneten Grundträger miteinander verbunden werden. Hierzu ist insbesondere bevorzugt, dass die Abschnitte der zweiten Faltkante der ersten Längskante eines ersten Grundträgers und die Abschnitte der zweiten Faltkante der zweiten Längskante eines benachbarten Grundträgers jeweils mindestens ein erstes Verbindungselement aufweisen.

In einer weiteren bevorzugten Ausgestaltung ist vorgesehen, dass die zweiten Durchtrittsöffnungen zwischen der jeweiligen ersten Längskante und der jeweiligen Faltlinie der Aufsätze oder zwischen der jeweiligen zweiten Längskante und der jeweiligen Faltlinie der Aufsätze angeordnet sind.

In Längsrichtung der Aufsätze gesehen ist somit bevorzugt, dass sich die zweiten Durchtrittsöffnungen auf der rechten oder linken Hälfte eines Aufsatzes befinden. Eine solche bezogen auf die Längsachse der Aufsätze asymmetrische Anordnung der zweiten Durchtrittsöffnungen ermöglicht es in besonders einfacher Weise, die zweiten Durchtrittsöffnungen versetzt zu den ersten Durchtrittsöffnungen der Grundträger anzuordnen und so für eine besonders gute Partikelabscheidung zu sorgen.

In einer weiteren bevorzugten Ausgestaltung ist vorgesehen, dass die ersten Verbindungselemente als, vorzugsweise im Wesentlichen horizontale, Vorsprünge ausgebildet sind. Ferner ist bevorzugt, dass die zweiten Verbindungselemente als Verbindungsöffnungen ausgebildet sind.

Diese Ausgestaltungen stellen eine besonders bevorzugte, da einfache und vorzugsweise insbesondere lösbare, Variante der Verbindung zwischen den Aufsätzen und dem mindestens einen Grundträger dar.

Ferner ist eine Ausgestaltung des Filterelements bevorzugt, die sich dadurch auszeichnet, dass die ersten Verbindungselemente als Verbindungselementpaare ausgebildet sind, wobei sich jeweils ein Paar von ersten Verbindungselementen im Bereich einer der zweiten Faltkanten, vorzugsweise entlang der Erstreckungsrichtung der zweiten Faltkanten leicht versetzt, gegenüberliegt. Ferner ist bevorzugt, dass die zweiten Verbindungselemente als Verbindungselementpaare ausgebildet sind, wobei sich jeweils ein Paar von zweiten Verbindungselementen der ersten und zweiten Längskanten, vorzugsweise entlang der Erstreckungsrichtung der Längskanten leicht versetzt, gegenüberliegt.

Besonders bevorzugt ist eine solche Ausgestaltung der ersten und zweiten Verbindungselemente als Verbindungselementpaare, wenn diese so ausgestaltet sind, dass sich jeweils ein erstes und ein zweites Verbindungselement passend treffen, um ineinandergreifen zu können.

In einer besonders bevorzugten Ausgestaltung ist ferner vorgesehen, dass die zweiten Faltkanten des Grundträgers jeweils drei Paare von ersten Verbindungselementen aufweisen, wobei vorzugsweise zwei Paare im Bereich der sich quer zu den ersten und zweiten Faltkanten erstreckenden Kanten des Grundträgers angeordnet sind und das dritte Paar mittig zwischen den anderen beiden Paaren angeordnet ist. Vorzugsweise ist ferner vorgesehen, dass jeder Aufsatz zwölf Paare von zweiten Verbindungselementen aufweist, wobei vorzugsweise das dritte und vierte Paar, das sechste und siebte Paar und das neunte und zehnte Paar weniger weit voneinander beabstandet sind als die übrigen (benachbarten) Paare. Eine solche Anordnung der Paare von ersten und zweiten Verbindungselementen ist insbesondere bevorzugt, wenn die Aufsätze eine Längserstreckung aufweisen, die dem Vierfachen der Erstreckung des mindestens einen Grundträgers in Richtung seiner Faltkanten entspricht.

Gemäß einem weiteren Aspekt der Erfindung wird die eingangs genannte Aufgabe auch gelöst durch ein Verfahren zur Montage eines zuvor beschriebenen Filterelements zur Abtrennung von Partikeln aus einem partikelbelasteten Rohgasstrom, umfassend: Bereitstellen mindestens eines Grundträgers, der als gefaltete Platte mit mehreren ersten Faltkanten und mehreren zweiten Faltkanten ausgebildet ist, wobei im Bereich der ersten Faltkanten mehrere erste Durchtrittsöffnungen und im Bereich der zweiten Faltkanten mehrere erste Verbindungselemente angeordnet sind, Bereitstellen mehrerer Aufsätze, wobei jeder Aufsatz als ein in Längsrichtung entlang einer Faltlinie faltbarer Streifen mit mehreren zweiten Durchtrittsöffnungen und einer ersten und einer zweiten Längskante ausgebildet ist, und wobei jeder Aufsatz ferner im Bereich der ersten und zweiten Längskante zweite Verbindungselemente aufweist, Falten der Aufsätze jeweils entlang ihrer Faltlinie, Anordnen der Aufsätze auf dem Grundträger derart, dass die zweiten Verbindungselemente der ersten und zweiten Längskanten jedes Aufsatzes mit den ersten Verbindungselementen zweier benachbarter zweiter Faltkanten verbunden sind und die zweiten Verbindungselemente der ersten Längskante eines der Aufsätze und die zweiten Verbindungelemente der zweiten Längskante eines benachbarten Aufsatzes mit den ersten Verbindungselementen einer der zweiten Faltkanten des Grundträgers verbunden sind.

Ein Verfahren zur Herstellung eines Grundträgers und/oder eines Aufsatzes für ein zuvor beschriebenes Filterelement zur Abtrennung von Partikeln aus einem partikelbelasteten Rohgasstrom umfasst: Spritzgießen eines Grundträgers, der als gefaltete Platte mit mehreren ersten Faltkanten und mehreren zweiten Faltkanten ausgebildet ist, wobei im Bereich der ersten Faltkanten mehrere erste Durchtrittsöffnungen und im Bereich der zweiten Faltkanten mehrere erste Verbindungselemente angeordnet sind, vorzugsweise aus Kunststoff, und/oder Extrudieren eines Aufsatzes, wobei der Aufsatz als ein in Längsrichtung entlang einer Faltlinie faltbarer Streifen mit mehreren zweiten Durchtrittsöffnungen und einer ersten und einer zweiten Längskante ausgebildet ist, und wobei der Aufsatz ferner im Bereich der ersten und zweiten Längskante zweite Verbindungselemente aufweist.

Das Herstellungsverfahren wird vorzugsweise dadurch weitergebildet, dass sich die Faltlinie des Aufsatzes in oder quer zur Extrusionsrichtung erstreckt.

Eine weitere bevorzugte Ausgestaltung des Verfahrens ergibt sich dadurch, dass die Faltlinie des Aufsatzes besser verformbar ist als ein übriger Bereich des Aufsatzes und die Verbesserung der Verformbarkeit durch eine abschnittsweise Verringerung der Wandstärke erzeugt wird, vorzugsweise durch einen spanlosen Umformvorgang.

Eine bevorzugte Ausführungsform der Erfindung wird beispielhaft anhand der beiliegenden Figuren beschrieben. Es zeigen:
- Figur 1:: eine Draufsicht auf einen Grundträger einer beispielhaften Ausführungsform eines Filterelements;
- Figur 2:: eine Seitenansicht in Richtung der Faltkanten des Grundträgers gemäß Figur 1;
- Figur 3:: eine Seitenansicht in Richtung orthogonal zu den Faltkanten des Grundträgers gemäß Figur 1;
- Figur 4:: einen Querschnitt gemäß der Schnittlinie A-A aus Figur 1;
- Figur 5:: einen vergrößerten Ausschnitt aus Figur 1;
- Figur 6:: eine Draufsicht auf einen Aufsatz für eine beispielhafte Ausführung eines Filterelements mit mindestens einem Grundträger gemäß Figur 1;
- Figur 7:: eine Seitenansicht des Aufsatzes gemäß Figur 6 im gefalteten Zustand;
- Figur 8:: eine Draufsicht auf den Aufsatz gemäß Figur 6 im gefalteten Zustand;
- Figur 9:: einen Querschnitt des Aufsatzes gemäß Figur 6 im gefalteten Zustand; und
- Figur 10:: einen vergrößerten Ausschnitt gemäß Detail A aus Figur 6.

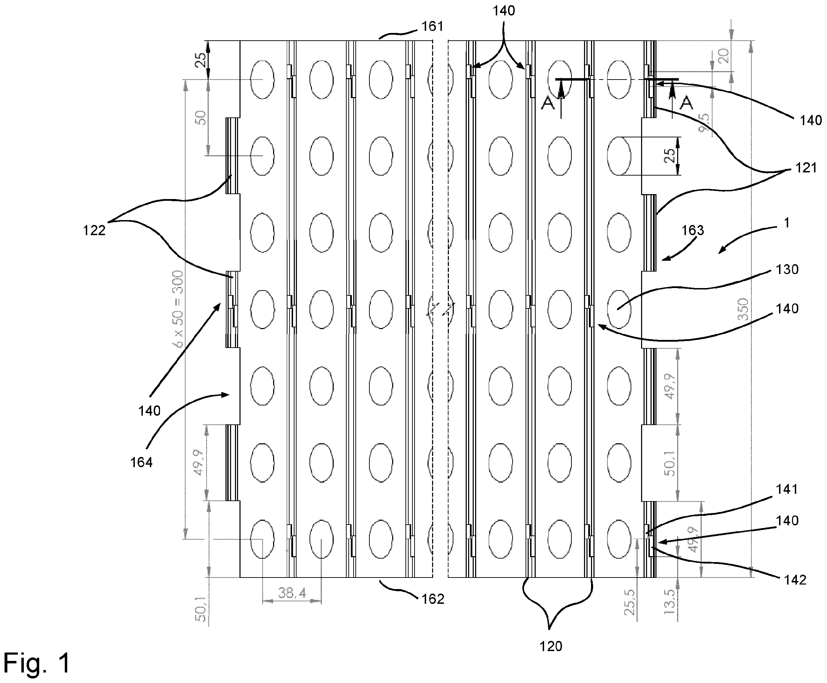

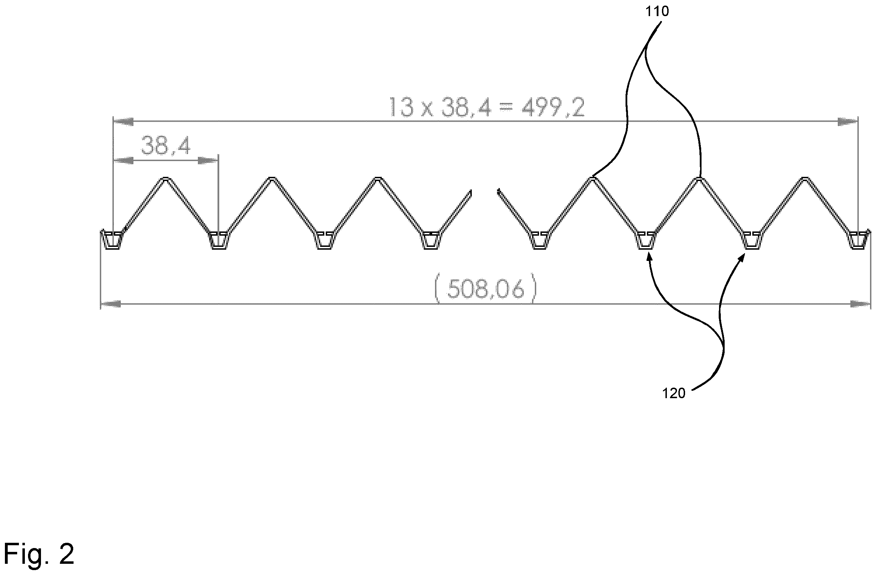

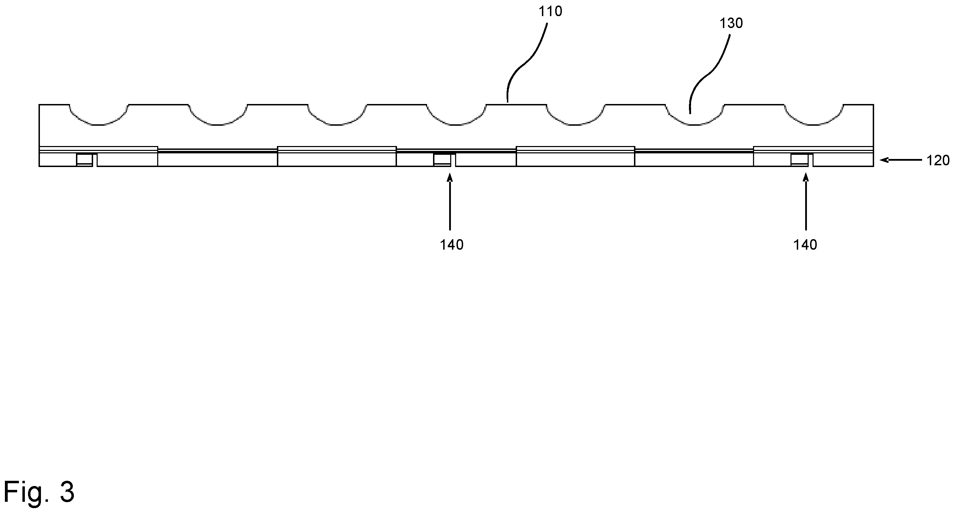

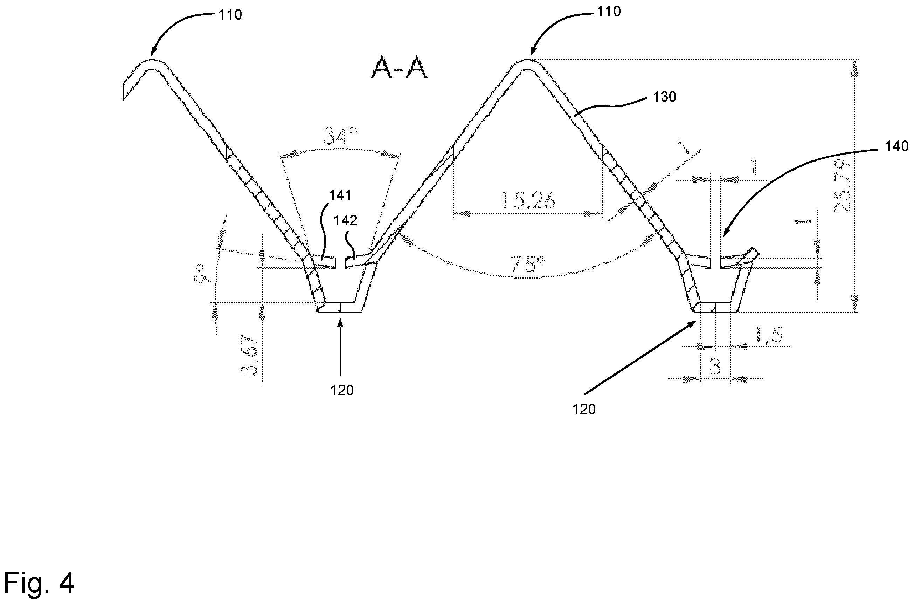

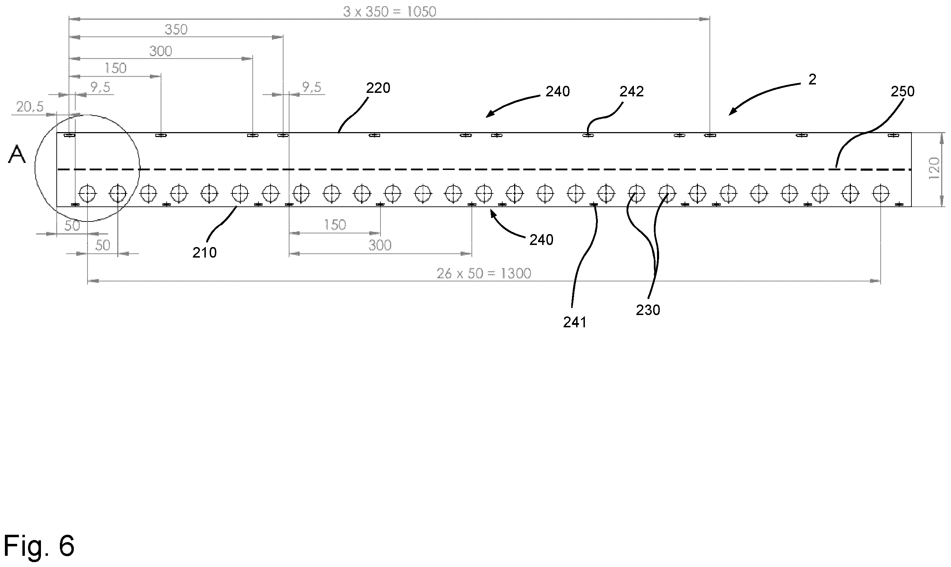

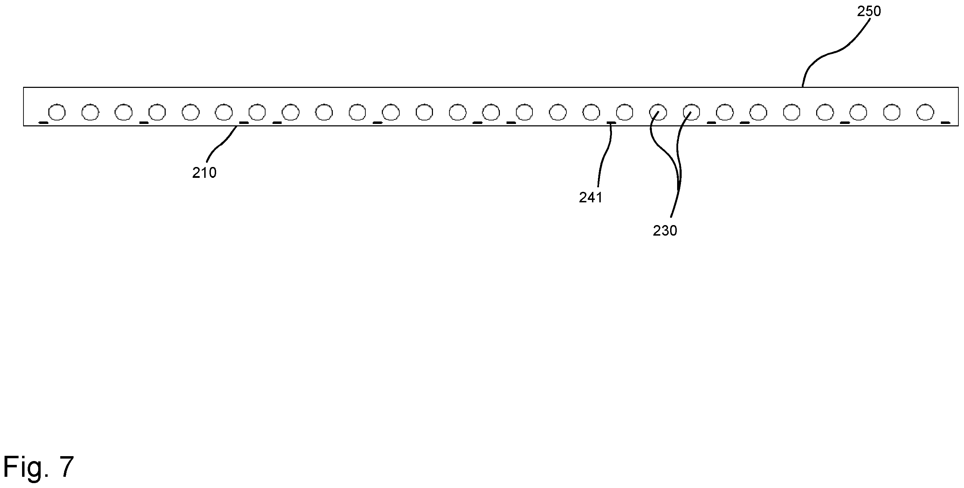

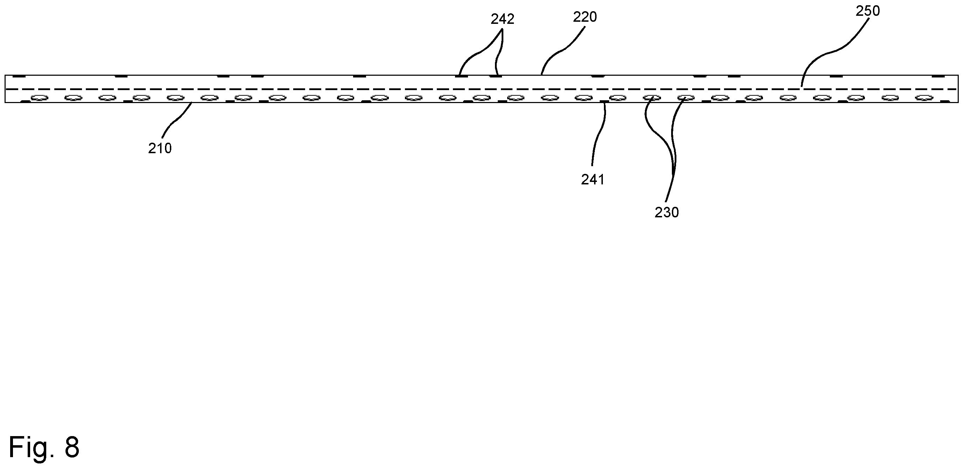

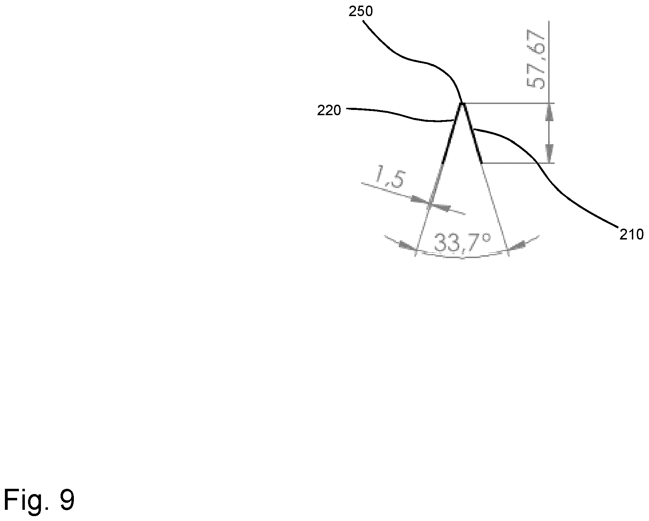

In den Figuren 1 bis 5 ist ein Grundträger 1 und in den Figuren 6 bis 10 ein Aufsatz 2 für eine beispielhafte Ausführungsform eines erfindungsgemäßen Filterelements dargestellt. Die Abmessungen des in den Figuren 1 bis 5 dargestellten Grundträgers 1 und des in den Figuren 6 bis 10 dargestellten Aufsatzes 2 sind so gewählt, dass die Längserstreckung des Aufsatzes 2 dem Vierfachen der Erstreckung des Grundträgers 1 in Richtung seiner Faltkanten 110, 120 entspricht. Im zusammengesetzten Zustand wird ein beispielhaftes Filterelement somit vorzugsweise vier Grundträger 1 aufweisen, die in Richtung ihrer Faltkanten 110, 120 hintereinander angeordnet sind und durch eine Vielzahl von Aufsätzen 2 miteinander verbunden sind, sodass jeder der Aufsätze 2 die vier hintereinander angeordneten Grundträger 1 überspannt.

Der Grundträger 1 ist als gefaltete Platte ausgebildet und im Spritzgussverfahren aus Kunststoff, vorzugsweise Polypropylen, Copolymer (PP-C) hergestellt. Der Grundträger 1 ist formstabil, das heißt er behält seine Form bei den Beanspruchungen, die bei bestimmungsgemäßem Transport und Gebrauch auftreten, im Wesentlichen bei, ohne sich stark zu verformen. Der Grundträger 1 weist mehrere erste Faltkanten 110 und mehrere zweite Faltkanten 120 auf. Im Bereich der ersten Faltkanten 110 sind mehrere Durchtrittsöffnungen 130 angeordnet. Die Durchtrittsöffnungen 130 sind mittig über den ersten Faltkanten 110 angeordnet und gleichmäßig voneinander beabstandet.

Im Bereich der zweiten Faltkanten 120 sind mehrere erste Verbindungselemente 140 angeordnet. Die ersten Verbindungselemente 140 sind als Verbindungselementpaare 141, 142 im Bereich der zweiten Faltkanten 120 ausgebildet, wobei jeweils ein Paar 141, 142 von ersten Verbindungselementen 140 entlang der Erstreckungsrichtung der zweiten Faltkante 120 leicht versetzt gegenüberliegt. Ferner sind die ersten Verbindungselemente 140 als im Wesentlichen horizontale Vorsprünge 141, 142 ausgebildet. Wie insbesondere in Figur 1 zu erkennen ist, weist der Grundträger 1 jeweils drei Paare 141, 142 von ersten Verbindungselementen 140 auf, wobei zwei der Paare 141, 142 im Bereich der sich quer zu den ersten und zweiten Faltkanten 110, 120 erstreckenden Kanten 161, 162 des Grundträgers 1 angeordnet sind und das dritte Paar mittig zwischen den beiden anderen Paaren angeordnet ist.

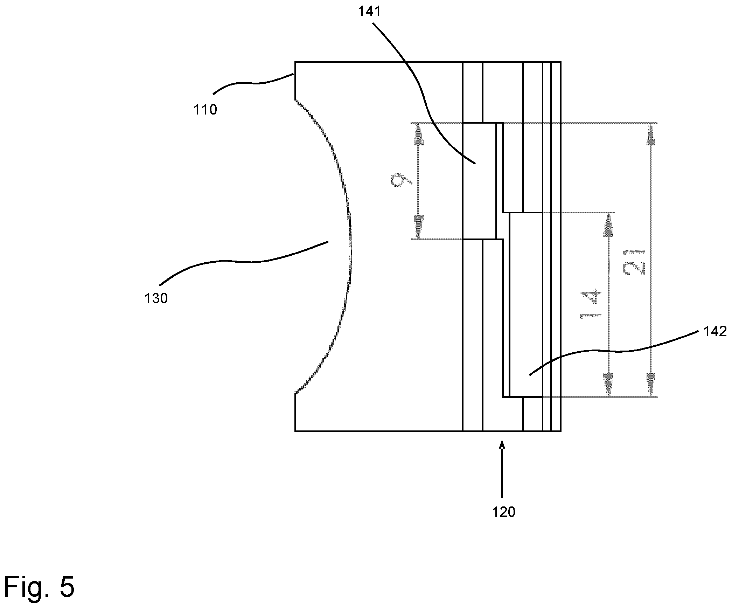

Wie insbesondere in Figur 5 zu erkennen ist, sind die beiden im wesentlichen horizontalen Vorsprünge 141, 142 in Erstreckungsrichtung der zweiten Faltkante 120 versetzt zueinander angeordnet. Ferner sind die beiden im Wesentlichen horizontalen Vorsprünge 141, 142 so ausgebildet, dass sie in Erstreckungsrichtung der zweiten Faltkante 120 eine unterschiedliche Längserstreckung aufweisen. In dem in den Figuren gezeigten Ausführungsbeispiel ist der Vorsprung 141 kürzer als der Vorsprung 142, wobei es einen kleinen Überschneidungsbereich in Längsrichtung der zweiten Faltkante 120 gibt.

Der Grundträger weist ferner zwei gegenüberliegende, sich parallel zu den Faltkanten 110, 120 erstreckende Längskanten 163, 164 auf, wobei beide Längskanten 163, 164 jeweils Abschnitte 121, 122 zweiter Faltkanten 120 bilden. Die Abschnitte 121 der zweiten Faltkante 120 der ersten Längskante 163 und die Abschnitte 122 der zweiten Faltkante 120 der zweiten Längskante 164 sind in Richtung der Faltkanten 120 überschneidungsfrei. Auf diese Weise wird es ermöglicht, dass die Abschnitte 121 der ersten Längskante 163 eines ersten Grundträgers 1 mit den Abschnitten 122 der anderen Längskante 164 eines zweiten, benachbarten Grundträgers eine gemeinsame zweite Faltkante 120 bilden. An der ersten Längskante 163 sind vier Abschnitte 121 ausgebildet, von denen die beiden äußeren, an die Querkanten 161, 162 grenzenden Abschnitte jeweils ein Paar von ersten Verbindungselementen 140 aufweisen. An der zweiten Längskante 164 sind drei Abschnitte 122 ausgebildet, von denen der mittlere Abschnitt ein Paar von ersten Verbindungselementen 140 aufweist.

Der Aufsatz 2 ist als ein in Längsrichtung entlang einer Faltlinie 250 faltbarer Streifen im Extrusionsverfahren aus Kunststoff, insbesondere aus PVC, ausgebildet. Der Aufsatz 2 weist mehrere Durchtrittsöffnungen 230 auf, die in Längsrichtung des Aufsatzes 2 voneinander gleichmäßig beabstandet sind. Der Aufsatz 2 weist eine erste und eine zweite Längskante 210, 220 auf, in deren Bereich zweite Verbindungselemente 240 angeordnet sind.

Mehrere Aufsätze 2 werden vorzugsweise im ungefalteten Zustand aufeinander gestapelt transportiert und erst vor Ort entlang der Faltlinie 250, die vorzugsweise als Filmscharnier ausgebildet ist, gefaltet und auf Grundträger 1 aufgesteckt. Die zweiten Durchtrittsöffnungen 230 sind zwischen der ersten Längskante 210 und der Faltlinie 250 des Aufsatzes 2 angeordnet.

Durch die Anordnung der ersten Durchtrittsöffnungen 130 mittig zu den ersten Faltkanten 110 des Grundträgers 1 und der Anordnung der zweiten Durchtrittsöffnungen 230 zwischen der ersten Längskante 210 und der Faltlinie 250 des Aufsatzes 2 ergibt sich im zusammengesetzten Zustand des Filterelements eine versetzte Anordnung der ersten Durchtrittsöffnungen 130 zu den zweiten Durchtrittsöffnungen 230, sodass beim Durchströmen des Filterelements die Abluft eine Richtungsänderung vollziehen muss, um zunächst die ersten Durchtrittsöffnungen 130 und anschließend die zweiten Durchtrittsöffnungen 230 zu durchströmen, und aufgrund der Schwerkraft Partikel, insbesondere größere Partikel, diese Richtungsänderung nicht oder nicht in ausreichendem Maße vollziehen können, und somit in einem Zwischenströmungsraum zwischen dem Grundträger und den Aufsätzen verbleiben und aus der Abluft ausgeschieden werden.

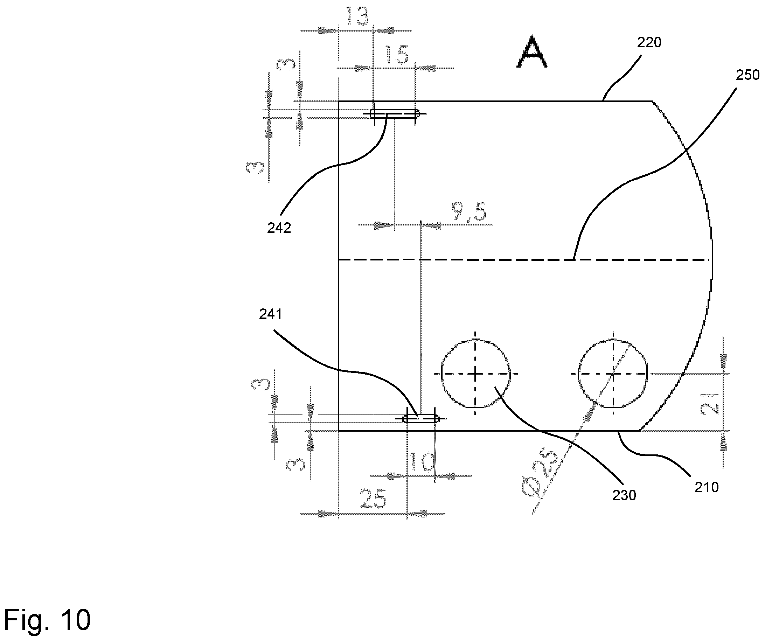

Die zweiten Verbindungselemente 240 sind als Verbindungsöffnungen ausgebildet und bilden ferner Verbindungselementpaare 241, 242, wobei sich jeweils ein Paar 241, 242 von zweiten Verbindungselementen 240 der ersten und zweiten Längskanten 210, 220 entlang der Erstreckungsrichtung der Längskanten 210, 220 leicht versetzt gegenüberliegt. Wie insbesondere in Figur 10 zu erkennen ist, ist die Verbindungsöffnung 241 kürzer ausgebildet als die Verbindungsöffnung 242, wobei sich die Verbindungsöffnungen 241, 242 in Längsrichtung des Aufsatzes 2 leicht überlappen.

In Zusammenschau der den Grundträger 1 darstellenden Figuren 1 bis 5 und der den Aufsatz 2 darstellenden Figuren 6 bis 10 wird deutlich, dass die Paare von ersten und zweiten Verbindungselementen 140, 240 so angeordnet und ausgebildet sind, dass ein Vorsprung 141 des Grundträgers 1 mit einer Verbindungsöffnung 241 eines Aufsatzes 2 und ein Vorsprung 142 des Grundträgers 1 mit einer Verbindungsöffnung 242 eines Aufsatzes 2 im zusammengesetzten Zustand in Form einer lösbaren Schnapp- oder Rastverbindung ineinandergreift. Auf diese Weise können verschiedene Vorteile realisiert werden. Zum einen können eine Vielzahl von aufeinandergestapelten Grundträgern 1 und eine weitere Vielzahl von im vorzugsweise ungefalteten Zustand aufeinandergestapelten Aufsätzen 2 platzsparend und damit kostengünstig zum Einbauort transportiert werden. Vor Ort können dann mehrere Grundträger 1 mit ihren Längskanten 163, 164 bzw. ihren Querkanten 161, 162 aneinander angeordnet werden, um die bevorzugte Grundfläche eines Filterelements zu erhalten. Auf diese Mehrzahl von in Quer- und Längsrichtung nebeneinander angeordneten Grundträgern 1 wird dann eine entsprechende Anzahl an Aufsätzen 2 angeordnet. Hierzu wird jeder Aufsatz 2 entlang seiner Faltlinie 250 gefaltet und dann mit den Verbindungsöffnungen 241, 242 an den Vorsprüngen 141, 142 benachbarter zweiter Faltkanten 120 der Grundträger 1 aufgesteckt. Die Faltlinie 250 eines Aufsatzes 2 erstreckt sich dabei vorzugsweise parallel zur ersten Faltkante 110 des Grundträgers 1, die zwischen den benachbarten zweiten Faltkanten 120 liegt, mit denen die Verbindungsöffnungen 241, 242 über den Eingriff mit den jeweiligen Vorsprüngen 141, 142 in Eingriff stehen. Die Vielzahl von Aufsätzen 2 wird dabei derart auf die Grundträger 1 aufgesteckt, dass jeweils die Verbindungsöffnungen 241 einer ersten Längskante 210 eines ersten Aufsatzes 2 und die zweiten Verbindungsöffnungen 242 der zweiten Längskante 220 eines zweiten Aufsatzes mit den Vorsprüngen 141, 142 einer einzigen, gemeinsamen zweiten Faltkante 120 der Grundträger in Eingriff kommen.

Da die Aufsätze 2 aufgrund ihrer Längserstreckung mehrere Grundträger 1 übergreifen, die entlang ihrer ersten und zweiten Faltkante 110, 120 hintereinander angeordnet sind, wobei sie mit ihren jeweiligen Querkanten 161, 162 aneinanderstoßen, wird durch die lösbare Rast- bzw. Schnappverbindung zwischen den zweiten Verbindungselementen 240 und den ersten Verbindungselementen 140 auch eine Verbindung zwischen den mehreren Grundträgern 1 hergestellt.

In Richtung quer zur Erstreckung der ersten und zweiten Faltkanten 110, 120 der Grundträger 1 wird durch die abschnittsweise Ausgestaltung der zweiten Faltkanten 120 an den Längskanten 163, 164 der Grundträger 1 ebenfalls eine Verbindung zwischen zwei Grundträgern 1, die an ihren Längskanten 163, 164 aneinanderstoßen, über den Eingriff der ersten und zweiten Verbindungselementen 140, 240 geschaffen.

Auf diese Weise kann die Größe der Filterelemente durch die Wahl der entsprechenden Anzahl von Grundträgern 1 und Aufsätzen 2 angepasst werden. Ferner können einzelne Grundträger 1 und/oder einzelne Aufsätze 2 bei Bedarf, beispielsweise aufgrund von Beschädigungen, ausgetauscht werden.

Die lösbare Schnapp- bzw. Rastverbindung zwischen den Grundträgern 1 und den Aufsätzen 2 ermöglicht ferner eine robuste Verbindung, die auch beim langfristigen Einsatz mit wiederholten Reinigungsvorgängen eine zuverlässige Verbindung zwischen Grundträgern 1 und Aufsätzen 2 sicherstellt.

## Patentansprüche

1. Filterelement zur Abtrennung von Partikeln aus einem partikelbelasteten Rohgasstrom, umfassend:
- mindestens einen Grundträger (1), der als gefaltete Platte mit mehreren ersten Faltkanten (110) und mehreren zweiten Faltkanten (120) ausgebildet ist, wobei im Bereich der ersten Faltkanten (110) mehrere erste Durchtrittsöffnungen (130) und im Bereich der zweiten Faltkanten (120) mehrere erste Verbindungselemente (140) angeordnet sind, und
- mehrere Aufsätze (2), wobei jeder Aufsatz (2) als ein in Längsrichtung entlang einer Faltlinie (250) faltbarer Streifen mit mehreren zweiten Durchtrittsöffnungen (230) und einer ersten und einer zweiten Längskante (210, 220) ausgebildet ist, und wobei jeder Aufsatz (2) ferner im Bereich der ersten und zweiten Längskante (210, 220) zweite Verbindungselemente (240) aufweist,
wobei die Aufsätze (2) jeweils entlang ihrer Faltlinie (250) gefaltet und derart auf dem Grundträger (1) angeordnet sind, dass die zweiten Verbindungselemente (240) der ersten und zweiten Längskanten (210, 220) jedes Aufsatzes (2) mit den ersten Verbindungselementen (140) zweier benachbarter zweiter Faltkanten (120) verbunden sind und die zweiten Verbindungselemente (241) der ersten Längskante (210) eines der Aufsätze (2) und die zweiten Verbindungelemente (242) der zweiten Längskante (220) eines benachbarten Aufsatzes (2) mit den ersten Verbindungselementen (140) einer der zweiten Faltkanten (120) des Grundträgers (1) verbunden sind, wobei die ersten und zweiten Durchtrittsöffnungen in Strömungsrichtung versetzt zueinander angeordnet sind, so dass der Rohgasstrom aufgrund der versetzten Anordnung der ersten und zweiten Durchtrittsöffnungen in einem Zwischenströmungsraum zwischen dem Grundträger und den mehreren Aufsätzen abgelenkt wird.

2. Filterelement nach mindestens einem der vorhergehenden Ansprüche,
**dadurch gekennzeichnet, dass** der Grundträger (1) als Spritzgussteil ausgebildet ist und/oder die Aufsätze (2) als Extrusionsteile ausgebildet sind.

3. Filterelement nach mindestens einem der vorhergehenden Ansprüche,
**dadurch gekennzeichnet, dass** der Grundträger (1) und/oder die Aufsätze (2) aus Kunststoff bestehen oder Kunststoff aufweisen.

4. Filterelement nach mindestens einem der vorhergehenden Ansprüche,
**dadurch gekennzeichnet, dass** die Längserstreckung der Aufsätze (2) einem, vorzugsweise ganzzahligen, Vielfachen der Erstreckung des mindestens einen Grundträgers (1) in Richtung seiner Faltkanten (110, 120) entspricht.

5. Filterelement nach mindestens einem der vorhergehenden Ansprüche,
**dadurch gekennzeichnet, dass** die Verbindung zwischen den ersten und zweiten Verbindungselementen (140, 240) als lösbare Verbindung ausgebildet ist.

6. Filterelement nach mindestens einem der vorhergehenden Ansprüche,
**dadurch gekennzeichnet, dass** der Grundträger (1) zwei gegenüberliegende, sich parallel zu den Faltkanten (110, 120) erstreckende Längskanten (163, 164) aufweist, wobei beide Längskanten (163, 164) jeweils Abschnitte (121, 122) zweiter Faltkanten (120) bilden, wobei vorzugsweise die Abschnitte (121) der zweiten Faltkante (120) der ersten Längskante (163) und die Abschnitte (122) der zweiten Faltkante (120) der zweiten Längskante (164) in Richtung der Faltkanten überschneidungsfrei sind.

7. Filterelement nach mindestens einem der vorhergehenden Ansprüche,
**dadurch gekennzeichnet, dass** die Abschnitte (121) einer Längskante (163) eines ersten Grundträgers (1) mit den Abschnitten (122) der anderen Längskante (164) eines zweiten, benachbarten Grundträgers (1) eine gemeinsame zweite Faltkante (120) bilden.

8. Filterelement nach mindestens einem der vorhergehenden Ansprüche,
**dadurch gekennzeichnet, dass** die zweiten Durchtrittsöffnungen (230) zwischen der jeweiligen ersten Längskante (210) und der jeweiligen Faltlinie (250) der Aufsätze (2) oder zwischen der jeweiligen zweiten Längskante (220) und der jeweiligen Faltlinie (250) der Aufsätze (2) angeordnet sind.

9. Filterelement nach mindestens einem der vorhergehenden Ansprüche, **dadurch gekennzeichnet, dass**
- die ersten Verbindungselemente (140) als Verbindungselementpaare (141, 142) ausgebildet sind, wobei sich jeweils ein Paar (141, 142) von ersten Verbindungselementen (140) im Bereich einer der zweiten Faltkanten (120), vorzugsweise entlang der Erstreckungsrichtung der zweiten Faltkanten (120) leicht versetzt, gegenüberliegt, und/oder
- die zweiten Verbindungselemente (240) als Verbindungselementpaare (241, 242) ausgebildet sind, wobei sich jeweils ein Paar (241, 242) von zweiten Verbindungselementen (240) der ersten und zweiten Längskanten (210, 220), vorzugsweise entlang der Erstreckungsrichtung der Längskanten (210, 220) leicht versetzt, gegenüberliegt.

10. Verfahren zur Montage eines Filterelements zur Abtrennung von Partikeln aus einem partikelbelasteten Rohgasstrom nach einem der vorhergehenden Ansprüche 1-9,
umfassend:
- Bereitstellen mindestens eines Grundträgers (1), der als gefaltete Platte mit mehreren ersten Faltkanten (110) und mehreren zweiten Faltkanten (120) ausgebildet ist, wobei im Bereich der ersten Faltkanten (110) mehrere erste Durchtrittsöffnungen (130) und im Bereich der zweiten Faltkanten (120) mehrere erste Verbindungselemente (140) angeordnet sind,
- Bereitstellen mehrerer Aufsätze (2), wobei jeder Aufsatz (2) als ein in Längsrichtung entlang einer Faltlinie (250) faltbarer Streifen mit mehreren zweiten Durchtrittsöffnungen (230) und einer ersten und einer zweiten Längskante (210, 220) ausgebildet ist, und wobei jeder Aufsatz (2) ferner im Bereich der ersten und zweiten Längskante (210, 220) zweite Verbindungselemente aufweist,
- Falten der Aufsätze (2) jeweils entlang ihrer Faltlinie (250),
- Anordnen der Aufsätze (2) auf dem Grundträger (1) derart, dass die zweiten Verbindungselemente (240) der ersten und zweiten Längskanten (210, 220) jedes Aufsatzes (2) mit den ersten Verbindungselementen (140) zweier benachbarter zweiter Faltkanten (120) verbunden sind und die zweiten Verbindungselemente (241) der ersten Längskante (210) eines der Aufsätze (2) und die zweiten Verbindungelemente (242) der zweiten Längskante (220) eines benachbarten Aufsatzes (2) mit den ersten Verbindungselementen (140) einer der zweiten Faltkanten (120) des Grundträgers (1) verbunden sind, wobei die ersten und zweiten Durchtrittsöffnungen in Strömungsrichtung versetzt zueinander angeordnet sind, so dass der Rohgasstrom aufgrund der versetzten Anordnung der ersten und zweiten Durchtrittsöffnungen in einem Zwischenströmungsraum zwischen dem Grundträger und den mehreren Aufsätzen abgelenkt wird.

## Claims

1. Filter element for separating particles from a particle-laden crude gas stream, comprising:
- at least one base carrier (1), which is configured as a folded plate with a plurality of first folding edges (110) and a plurality of second folding edges (120), wherein a plurality of first passage openings (130) are arranged in the region of the first folding edges (110) and a plurality of first connection elements (140) are arranged in the region of the second folding edges (120) and
- a plurality of attachments (2), wherein each of the attachments (2) is configured as a strip foldable in a longitudinal direction along a fold line (250) with a plurality of second passage openings (230) and a first and a second longitudinal edge (210, 220), and wherein each attachment (2) further comprises second connection elements (240) in the region of the first and the second longitudinal edge (210, 220);
wherein the attachments (2) are respectively folded along their fold line (250) and arranged on the base carrier (1) such that the second connection elements (240) of the first and the second longitudinal edges (210, 220) of each attachment (2) are connected with the first connection elements (140) of two adjacent second folding edges (120), and the second connection elements (241) of the first longitudinal edge (210) of one of the attachments (2) and the second connection elements (242) of the second longitudinal edge (220) of an adjacent attachment (2) are connected with the first connection elements (140) of one of the second folding edges (120) of the base carrier (1), wherein the first and second passage openings are arranged offset to one another in the current direction such that the crude gas stream, due to the offset arrangement of the first and second passage openings, is deflected in an intermediate flow chamber between the base carrier and the plurality of attachments.

2. Filter element according to at least one of the preceding claims, **characterised in that** the base carrier (1) is configured as an injection-moulded part and/or the attachments (2) are configured as extruded parts.

3. Filter element according to at least one of the preceding claims, **characterised in that** the base carrier (1) and/or the attachments (2) consist of plastic or comprise plastic.

4. Filter element according to at least one of the preceding claims, **characterised in that** the longitudinal extension of the attachments (2) corresponds to a preferably integer multiple of the extension of the at least one base carrier (1) in the direction of its folding edges (110, 120).

5. Filter element according to at least one of the preceding claims, **characterised in that** the connection between the first and second connection elements (140, 240) is configured as a releasable connection.

6. Filter element according to at least one of the preceding claims, **characterised in that** the base carrier (1) has two opposing longitudinal edges (163, 164) extending parallel to the folding edges (110, 120), wherein both longitudinal edges (163, 164) in each case form sections (121, 122) of second folding edges (120), wherein preferably the sections (121) of the second folding edge (120) of the first longitudinal edge (163) and the sections (122) of the second folding edge (120) of the second longitudinal edge (164) are free of overlaps in the direction of the folding edges.

7. Filter element according to at least one of the preceding claims, **characterised in that** the sections (121) of a longitudinal edge (163) of a first base carrier (1) with the sections (122) of the other longitudinal edge (164) of a second adjacent base carrier (1) form a common second folding edge (120).

8. Filter element according to at least one of the preceding claims, **characterised in that** the second passage openings (230) are arranged between the respective first longitudinal edge (210) and the respective fold line (250) of the attachments (2) or between the respective second longitudinal edge (220) and the respective fold line (250) of the attachments (2) .

9. Filter element according to at least one of the preceding claims, **characterised in that**
- the first connection elements (140) are configured as connection element pairs (141, 142), wherein in each case one pair (141, 142) of first connection elements (140) is arranged opposite to each other, in a slightly offset manner in the region of one of the second folding edges (120) preferably along the extension direction of the second folding edges (120); and/or
- the second connection elements (240) are configured as connection element pairs (241, 242),
wherein in each case one pair (241, 242) of second connection elements (240) of the first and the second longitudinal edges (210, 220) is arranged opposite to each other, in a slightly offset manner preferably along the extension direction of the longitudinal edges (210, 220).

10. Method for installing a filter element for separating particles from a particle-laden crude gas stream according to any one of the preceding claims 1 to 9, comprising:
- providing at least one base carrier (1), which is configured as a folded plate with a plurality of first folding edges (110) and a plurality of second folding edges (120), wherein a plurality of first passage openings (130) are arranged in the region of the first folding edges (110) and a plurality of first connection elements (140) are arranged in the region of the second folding edges (120),
- providing a plurality of attachments (2), wherein each of the attachments (2) is configured as a strip foldable in a longitudinal direction along a fold line (250) with a plurality of second passage openings (230) and a first and a second longitudinal edge (210, 220), and wherein each attachment (2) further comprises second connection elements in the region of the first and the second longitudinal edge (210, 220),
- folding the attachments (2) in each case along their fold line (250),
- arranging the attachments (2) on the base carrier (1) such that the second connection elements (240) of the first and the second longitudinal edges (210, 220) of each attachment (2) are connected with the first connection elements (140) of two adjacent second folding edges (120), and the second connection elements (241) of the first longitudinal edge (210) of one of the attachments (2) and the second connection elements (242) of the second longitudinal edge (220) of an adjacent attachment (2) are connected with the first connection elements (140) of one of the second folding edges (120) of the base carrier (1), wherein the first and second passage openings are arranged offset to one another in the current direction such that the crude gas stream, due to the offset arrangement of the first and second passage openings, is deflected in an intermediate flow chamber between the base carrier and the plurality of attachments.

## Revendications

1. Élément de filtre pour la séparation de particules dans un flux de gaz brut chargé en particules, comprenant :
- au moins un support de base (1), qui est réalisé en tant que plaque pliée avec plusieurs premiers bords de pliage (110) et plusieurs seconds bords de pliage (120), dans lequel plusieurs premières ouvertures de passage (130) sont agencées dans la zone des premiers bords de pliage (110) et plusieurs premiers éléments de liaison (140) sont agencés dans la zone des seconds bords de pliage (120), et
- plusieurs embouts (2), dans lequel chaque embout (2) est réalisé en tant que bande pliable le long d'une ligne de pliage (250) dans le sens longitudinal avec plusieurs secondes ouvertures de passage (230) et un premier et un second bord longitudinal (210, 220), et dans lequel chaque embout (2) présente en outre des seconds éléments de liaison (240) dans la zone du premier et second bord longitudinal (210, 220),
dans lequel les embouts (2) sont pliés respectivement le long de leur ligne de pliage (250) et agencés sur le support de base (1) de sorte que les seconds éléments de liaison (240) des premier et second bords longitudinaux (210, 220) de chaque embout (2) soient reliés aux premiers éléments de liaison (140) de deux seconds bords de pliage (120) adjacents et les seconds éléments de liaison (241) du premier bord longitudinal (210) d'un des embouts (2) et les seconds éléments de liaison (242) du second bord longitudinal (220) d'un embout (2) adjacent soient reliés aux premiers éléments de liaison (140) d'un des seconds bords de pliage (120) du support de base (1), dans lequel les première et seconde ouvertures de passage sont agencées décalées l'une par rapport à l'autre dans la direction d'écoulement de sorte que le flux de gaz brut soit dévié dans un espace d'écoulement intermédiaire entre le support de base et les plusieurs embouts en raison de l'agencement décalé des première et seconde ouvertures de passage.

2. Élément de filtre selon au moins l'une quelconque des revendications précédentes, **caractérisé en ce que** le support de base (1) est réalisé en tant que pièce moulée par injection et/ou les embouts (2) sont réalisés en tant que pièces d'extrusion.

3. Élément de filtre selon au moins l'une quelconque des revendications précédentes, **caractérisé en ce que** le support de base (1) et/ou les embouts (2) sont constitués de plastique ou présentent du plastique.

4. Élément de filtre selon au moins l'une quelconque des revendications précédentes, **caractérisé en ce que** l'extension longitudinale des embouts (2) correspond à un multiple, de préférence entier, de l'extension de l'au moins un support de base (1) en direction de ses bords de pliage (110, 120).

5. Élément de filtre selon au moins l'une quelconque des revendications précédentes, **caractérisé en ce que** la liaison entre les premier et second éléments de liaison (140, 240) est réalisée en tant que liaison amovible.

6. Élément de filtre selon au moins l'une quelconque des revendications précédentes, **caractérisé en ce que** le support de base (1) présente deux bords longitudinaux (163, 164) opposés, s'étendant parallèlement aux bords de pliage (110, 120), dans lequel les deux bords longitudinaux (163, 164) forment respectivement des sections (121, 122) de seconds bords de pliage (120), dans lequel de préférence les sections (121) du second bord de pliage (120) du premier bord longitudinal (163) et les sections (122) du second bord de pliage (120) du second bord longitudinal (164) sont sans chevauchement en direction des bords de pliage.

7. Élément de filtre selon au moins l'une quelconque des revendications précédentes, **caractérisé en ce que** les sections (121) d'un bord longitudinal (163) d'un premier support de base (1) forment avec les sections (122) de l'autre bord longitudinal (164) d'un second support de base (1) adjacent, un second bord de pliage commun (120).

8. Élément de filtre selon au moins l'une quelconque des revendications précédentes, **caractérisé en ce que** les secondes ouvertures de passage (230) sont agencées entre le premier bord longitudinal (210) respectif et la ligne de pliage (250) respective des embouts (2) ou entre le second bord longitudinal (220) respectif et la ligne de pliage (250) respective des embouts (2).

9. Élément de filtre selon au moins l'une quelconque des revendications précédentes, **caractérisé en ce que**
- les premiers éléments de liaison (140) sont réalisés en tant que paires d'éléments de liaison (141, 142), dans lequel respectivement une paire (141, 142) de premiers éléments de liaison (140) se fait face dans la zone d'un des seconds bords de pliage (120), de préférence le long de la direction d'extension des seconds bords de pliage (120) de manière légèrement décalée, et/ou
- les seconds éléments de liaison (240) sont réalisés en tant que paires d'éléments de liaison (241, 242), dans lequel respectivement une paire (241, 242) de seconds éléments de liaison (240) des premier et second bords longitudinaux (210, 220) se fait face, de préférence le long de la direction d'extension des bords longitudinaux (210, 220) de manière légèrement décalée.

10. Procédé de montage d'un élément de filtre pour la séparation de particules dans un flux de gaz brut chargé en particules selon l'une quelconque des revendications précédentes 1 à 9,
comprenant :
- la mise à disposition d'au moins un support de base (1), qui est réalisé en tant que plaque pliée avec plusieurs premiers bords de pliage (110) et plusieurs seconds bords de pliage (120), dans lequel plusieurs premières ouvertures de passage (130) sont agencées dans la zone des premiers bords de pliage (110) et plusieurs premiers éléments de liaison (140) sont agencés dans la zone des seconds bords de pliage (120),
- la mise à disposition de plusieurs embouts (2), dans lequel chaque embout (2) est réalisé en tant que bande pliable le long d'une ligne de pliage (250) dans le sens longitudinal avec plusieurs secondes ouvertures de passage (230) et un premier et un second bord longitudinal (210, 220), et dans lequel chaque embout (2) présente en outre des seconds éléments de liaison dans la zone du premier et second bord longitudinal (210, 220),
- le pliage des embouts (2) le long de leur ligne de pliage (250) respectivement,
- l'agencement des embouts (2) sur le support de base (1) de sorte que les seconds éléments de liaison (240) des premier et second bords longitudinaux (210, 220) de chaque embout (2) soient reliés aux premiers éléments de liaison (140) de deux seconds bords de pliage (120) adjacents et les seconds éléments de liaison (241) du premier bord longitudinal (210) d'un des embouts (2) et les seconds éléments de liaison (242) du second bord longitudinal (220) d'un embout (2) adjacent soient reliés aux premiers éléments de liaison (140) d'un des seconds bords de pliage (120) du support de base (1), dans lequel les première et seconde ouvertures de passage sont agencées décalées l'une par rapport à l'autre dans la direction d'écoulement de sorte que le flux de gaz brut soit dévié dans un espace d'écoulement intermédiaire entre le support de base et les plusieurs embouts en raison de l'agencement décalé des première et seconde ouvertures de passage.
